# DEMANDE DE BREVET EUROPEEN

(11) **EP 3 385 168 A1**
(43) Date de publication de la demande: **10.10.2018**
(21) Numéro de dépôt: 18165519.2
(22) Date de dépôt: 03.04.2018
(51) Int. Cl.: B64D 11/06, B60N 2/90

(54) **FAUTEUIL CONVERTIBLE AVEC REPOSE JAMBES OU SANS REPOSE JAMBES ET PROCEDE DE CONVERSION**

(30) Priorité: 04.04.2017 FR 1752931
(71) Demandeur: Stelia Aerospace, 17300 Rochefort (FR)
(72) Inventeur: TEXERAUD, Laurent, 17220 CLAVETTE (FR)
(74) Mandataire: Ipside

(57) **Abrégé**

Un siège comporte une assise (20) et une boîte (30), comportant un caisson (33) placé sous la surface support de matelas d'assise.

La boîte (30) peut être fixée immobile sur la structure de l'assise ou fixée mobile par rapport à la structure de l'assise par l'intermédiaire d'un ou de plusieurs bras articulés (315), et la boîte comporte un ensemble d'emplacements pour fixations dont un premier sous-ensemble dans lequel chaque emplacement pour une fixation est situé en vis-à-vis d'un point d'attache fixe sur la structure de l'assise, et dont un deuxième sous-ensemble, dont tous les emplacements pour fixations sont tous distincts de ceux du premier sous-ensemble, dans lequel chaque emplacement pour une fixation est situé en vis-à-vis d'un point d'attache sur un bras articulé (315) lorsque le siège est pourvu du ou des bras articulés.

Le procédé de conversion d'un siège ne comportant pas de repose jambes en un siège comportant un repose jambes, ou inversement, comporte une étape dans laquelle la boîte (30) est fixée simultanément à la structure de l'assise et à au moins un bras articulé (315).

## Description

### DOMAINE DE L'INVENTION

L'invention appartient au domaine des sièges de repos tels que les fauteuils utilisés dans l'aménagement des espaces passagers des véhicules et plus particulièrement des aéronefs.

L'invention concerne en particulier un siège comportant un repose jambes mis en oeuvre pour procurer un support aux jambes de l'occupant du siège afin d'en améliorer le confort lorsque le siège est dans une position de repos.

Plus particulièrement dans l'invention l'agencement de la structure du siège est adapté pour permettre une installation du repose jambes sur le siège en option.

### ART ANTERIEUR

Dans le domaine du transport de passagers, en particulier des aéronefs, les sièges proposés aux passagers sont des équipements ayant un fort impact commercial.

Les compagnies aériennes qui exploitent les aéronefs sont donc exigeantes en confort proposé aux passagers, mais restent également attentives aux coûts des équipements tant lors de leur acquisition que pour leur maintenance.

Le repose jambes fait partie des éléments d'un siège qui participent au confort du passager en lui apportant la possibilité de positions plus relaxantes que la position assis.

En pratique, le repose jambes est lié à la structure du siège et mobile afin de pouvoir prendre différentes positions par rapport à l'assise du siège.

Le plus souvent, la position du repose jambes peut être ajustée entre une position stockée dans laquelle le repose jambes n'est pas utilisé et au moins une position relevée dans laquelle le repose jambes étend la longueur de l'assise vers l'avant pour le confort de l'utilisateur du siège, en formant un angle plus ou moins marqué avec l'assise.

Dans une forme de réalisation connue, le repose jambes, est constitué principalement d'une plaque, adaptée aux dimensions voulues du repose jambes, recouverte d'un matelas, qui est fixée articulée sur la structure du siège supportant l'assise. Un actionneur, le plus souvent électrique, prenant appui sur la structure du siège permet de modifier sans effort la position du repose jambes par l'occupant du siège ou en fonction des positions d'autres éléments du siège, en particulier l'assise et le dossier.

Dans un tel agencement, la structure du repose jambes et celle de l'assise sont fortement interdépendantes et impactent significativement la définition technique du siège suivant qu'il s'agit d'un siège sans repose jambes ou d'un siège comportant un repose jambes.

Les conséquences de la présence ou non d'un repose jambes est d'autant plus sensible que le siège comporte, au moins dans le cas des sièges pour aéronefs, un gilet de sauvetage installé le plus souvent sous l'assise du siège et dont l'installation interfère avec celle du repose jambes et de ses mécanismes d'actionnement.

Il résulte de cette situation que la modification d'un siège donné pour transformer un siège sans repose jambes en un siège avec repose jambes, et inversement, s'avère complexe, voire impossible en pratique, lorsque l'exploitant d'un aéronef veux modifier le standard d'un siège en exploitation, par exemple lors d'une réaffectation d'un siège ou lors de la conversion du standard de confort d'une cabine.

### PRÉSENTATION DE L'INVENTION

La présente invention apporte une solution pour une conversion rapide et peu coûteuse du confort d'un siège par le montage ou non d'un repose jambes, ou par le démontage du repose jambes installé.

Le siège comporte une assise, ladite assise comportant une surface support de matelas d'assise fixée à une structure de ladite assise, et une boîte, ladite boîte comportant un caisson placé sous la surface support de matelas d'assise.

Suivant l'invention, la boîte peut être fixée immobile sur la structure de l'assise ou fixée mobile par rapport à la structure de l'assise par l'intermédiaire d'un ou de plusieurs bras articulés autour d'un axe de rotation, orienté suivant une direction latérale Y, par rapport à la structure de l'assise.

En outre, la boîte comporte un ensemble d'emplacements pour fixations, le dit ensemble comportant :
- un premier sous-ensemble d'une pluralité d'emplacements pour fixations dans lequel premier sous-ensemble chaque emplacement pour une fixation est situé, dans une position stockée de la boîte, en vis-à-vis d'un point d'attache fixe sur la structure de l'assise ; et
- un deuxième sous-ensemble d'une pluralité d'emplacements pour fixations, tous distincts des emplacements pour fixations du premier sous-ensemble, dans lequel deuxième sous-ensemble chaque emplacement pour une fixation est situé, dans la position stockée de la boîte, en vis-à-vis d'un point d'attache sur un bras articulé par rapport à la structure de l'assise lorsque le siège est pourvu d'un ou d'une pluralité de bras articulés pour supporter ladite boîte.

Ainsi, la boîte peut être montée soit fixe soit articulée par rapport à la structure de l'assise suivant les fonctions confiées à la boîte dans le siège, simple caisson fixe ou support mobile en plus d'un volume de stockage, en ayant la possibilité d'être fixée à l'équipage mobile des bras articulés en étant simultanément liée à la structure de l'assise pour réaliser la conversion entre les deux formes du siège.

Lorsque le siège est en condition d'utilisation, avantageusement la boîte est fixée à la structure de l'assise par une ou des fixations placées aux emplacements pour fixations du premier sous-ensemble, à l'exclusion des emplacements pour fixations du deuxième sous-ensemble.

Il est de la sorte évité des interférences avec le montage lorsque des bras articulés sont mis en oeuvre.

Avantageusement dans ce cas, une plaque avant passive, formant tout ou partie de la surface support de coussin d'assise, est fixée à la structure de l'assise du côté d'un bord avant de l'assise, une telle plaque avant passive étant ainsi fixée à la structure de l'assise indépendamment de la boîte également fixée à la structure de l'assise.

Lorsque le siège comporte un ou plusieurs bras articulés, le siège étant en condition d'utilisation, la boîte est fixée à ou aux bras articulés par des fixations placées aux emplacements pour fixations du deuxième sous-ensemble, à l'exclusion des emplacements pour fixations du premier sous-ensemble.

Dans ce cas, il est de la sorte évité des interférences avec le cas du montage de la boîte directement fixée à la structure de l'assise.

Dans ce cas, avantageusement une plaque avant active, comportant une plaque support formant tout ou partie de la surface support de coussin d'assise, est fixée à la structure de l'assise du côté d'un bord avant de l'assise, et sur laquelle plaque support sont articulés le ou les bras articulés et fixé un actionneur, agencé pour modifier une position de la boîte fixée à ou aux bras articulés.

Ainsi l'ensemble des parties actives et mobiles pour assurer les mouvements de la boîte sont regroupés en un seul composant du siège, la plaque avant active qui peut être montée et démontée simplement.

Lorsque la boîte est ainsi monté mobile, à l'avant du siège, avantageusement le caisson de la boîte est fermée par un repose jambes fixé sur une face avant de ladite boîte, la position dudit repose jambes par rapport à l'assise résultant de la position de ladite boîte modifiable par l'actionneur.

Il est ainsi réalisé un repose jambes dont une partie de la structure de soutient est formée par la boîte utilisée indépendamment de la fonction repose jambes tout en laissant le caisson accessible en retirant le repose jambes ou au contraire en protégeant le contenu du caisson par le repose jambes constituant un couvercle.

Suivant la mise en oeuvre d'un repose jambes ou non, lorsque le siège est dépourvu de repose jambes il comporte de préférence une plaque avant passive, et lorsque le siège comporte un repose jambes il comporte une plaque avant active.

Pour s'adapter simplement à la présence ou non d'un repose jambes, la structure de l'assise comporte des logements de fixations pour le montage alternativement d'une plaque avant passive ou d'une plaque avant active.

De manière encore plus avantageuse et pour limiter le nombre de points de fixation sur la structure de l'assise, les mêmes logements de fixations de la structure de l'assise sont mis en oeuvre pour fixer à ladite structure de l'assise, par des fixations démontables, alternativement la plaque avant passive et la plaque avant active, les plaques avant passive et plaque avant active étant mécaniquement interchangeables.

Dans une forme de réalisation, le siège comporte au moins une plaque arrière formant une partie de la surface support de matelas d'assise, ladite plaque étant fixée sur la structure de l'assise indépendamment de la plaque avant passive ou de la plaque avant active suivant le cas.

Il est ainsi limité les dimensions des plaques avant passive et plaque avant active dont les fonctions de support déterminées par la plaque avant active ne nécessitent pas qu'une plaque utilisée pour toute la surface support du matelas d'assise soit interchangeable pour les besoins de conversion, et il est assuré une stabilité de la structure de l'assise lorsque la plaque avant et démontée pour une conversion du siège.

L'invention concerne également un procédé de conversion d'un siège conforme à l'une des revendications précédentes dans lequel un siège ne comportant pas de repose jambes est converti en un siège comportant un repose jambes, ou inversement un siège comportant un repose jambes est converti en un siège ne comportant pas de repose jambes, ledit procédé de conversion comportant une étape dans laquelle la boîte est fixée simultanément à la structure de l'assise et à au moins un bras articulé par rapport à la structure de l'assise.

La mise en oeuvre d'une telle étape lors de la conversion évite que la boîte ne soit démontée du siège et assure un positionnement correct des différents éléments lors de la conversion.

La conversion d'un siège sans repose jambes en siège avec repose jambes comporte les étapes de :
- démonter une plaque avant passive fixée sur la structure de l'assise ; puis
- fixer une plaque avant active, équipée d'un actionneur du repose jambes et d'un ou plusieurs bras articulés, à la structure de l'assise à l'emplacement laissé libre par la plaque avant passive démontée à l'étape précédente ; puis
- fixer les bras articulés à la boîte, maintenue fixée directement à la structure de l'assise ; puis
- retirer les fixations maintenant la boîte fixée directement à la structure de l'assise.

La conversion d'un siège avec repose jambes en siège sans repose jambes comportant les étapes de :
- placer le repose jambes dans une position stockée ; puis
- fixer directement la boîte à la structure de l'assise ; puis
- désolidariser le ou les bras articulés de la boîte ; puis
- démonter une plaque avant active, supportant un actionneur du repose jambes et des bras articulés ; puis
- fixer la plaque avant passive à la structure de l'assise à l'emplacement laissé libre par la plaque avant active démontée à l'étape précédente.

La conversion d'un siège est ainsi obtenue par un nombre limité d'opérations qui ne remettent à aucun moment l'intégrité et la stabilité de la structure du siège.

### PRÉSENTATION DES FIGURES

L'invention est décrite en référence aux figures qui sont données à titre d'un exemple non limitatif d'un mode de réalisation de l'invention, qui représente de manière schématique :
Figure 1a : une représentation en vue isométrique partielle de la structure d'un siège suivant l'invention, vu depuis l'avant du siège, dépourvu de ses habillages et matelas, dans une configuration du siège sans repose jambes, en médaillon (a) la structure habillée ;
Figure 1b : une représentation en vue isométrique partielle de la structure du siège de la figure 1a, dans une configuration du siège avec repose jambes ;
Figure 2a : une représentation en vue isométrique partielle et éclatée de la structure de l'assise du siège dans la configuration de la figure 1a, sans repose jambes ;
Figure 2b : une représentation en vue isométrique partielle et éclatée de la structure de l'assise du siège dans la configuration de la figure 1b, comportant le repose jambes ;
Figure 3a : une vue isométrique de la plaque avant passive de l'assise du siège de la figure 1a, isolée du siège ;
Figure 3b : une vue isométrique de la plaque avant active de l'assise du siège de la figure 1b, isolée du siège, et qui est équipée d'un actionneur pour modifier la position du repose jambes ;

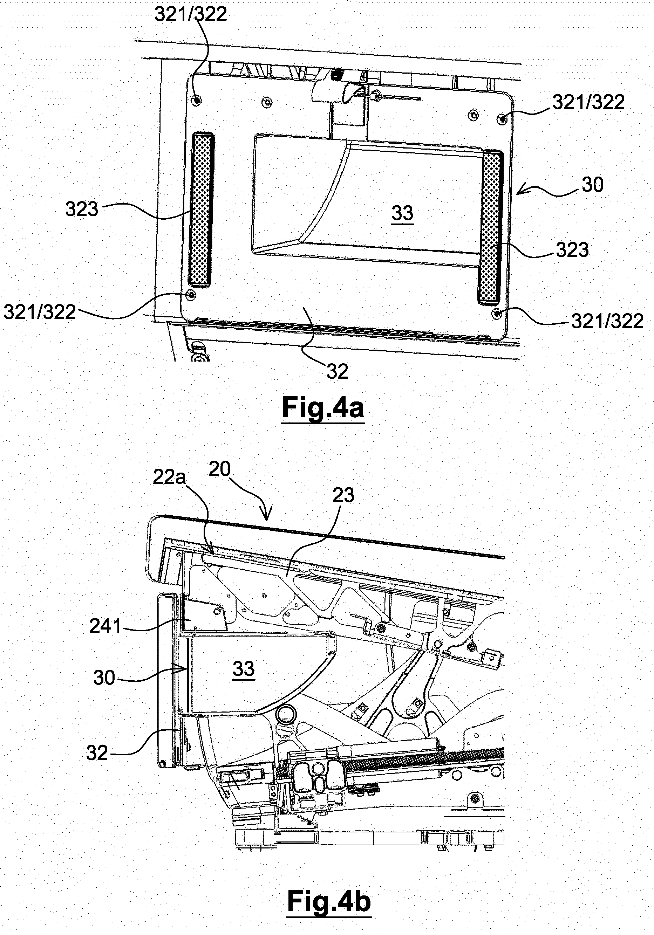

Figure 4a : une vue en perspective d'une boîte à gilet de sauvetage en position sous l'assise du siège dans la configuration de la figure 1a, fixée directement à la structure du siège, le panneau de fermeture étant enlevé et laissant apparaître l'intérieur de la boîte représentée vide ;
Figure 4b : une vue en coupe dans un plan vertical longitudinal d'une partie du siège comportant l'assise et la structure support de l'assise suivant la configuration sans repose jambes de la figure 4a ;
Figure 5a : une vue en perspective d'un repose jambes du siège de la figure 1b en position partiellement relevée, le panneau recouvert d'un matelas formant la surface du repose jambes étant en position sur la boîte et fermant la boîte
Figure 5b : une vue en coupe dans un plan vertical longitudinal d'une partie du siège comportant l'assise et la structure support de l'assise suivant la configuration avec repose jambes de la figure 5a, le repose jambes étant dans la position stockée ;
Figure 5c : une vue en coupe dans un plan vertical longitudinal d'une partie du siège comportant l'assise et la structure support de l'assise suivant la configuration avec repose jambes de la figure 5a, le repose jambes étant dans une position partiellement relevée.

Sur les différentes figures, les dessins ne sont pas nécessairement représentés avec une même échelle.

### DESCRIPTION D'UN MODE DÉTAILLÉ DE REALISATION DE L'INVENTION

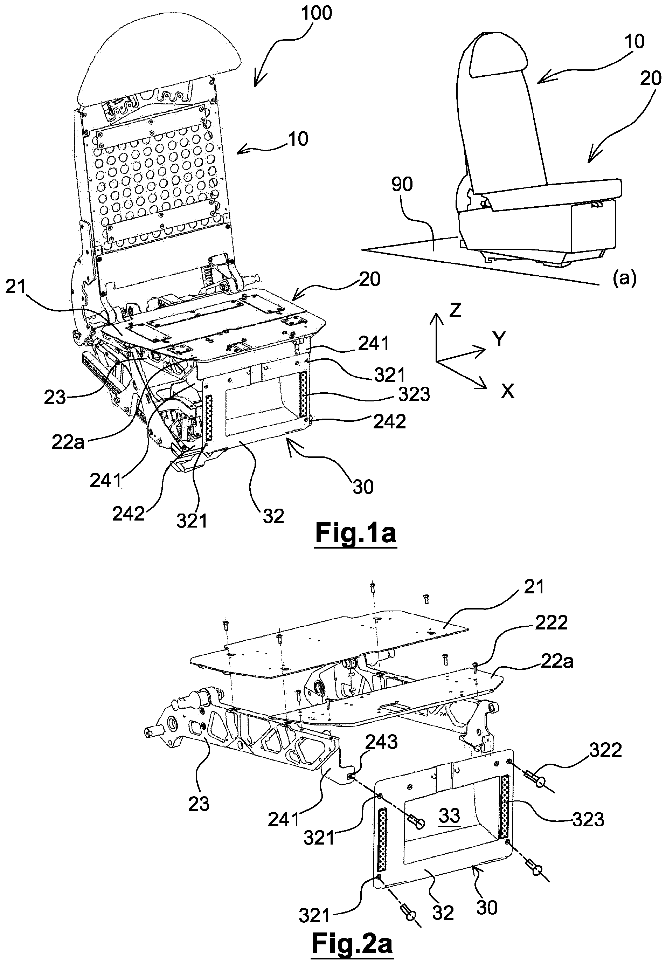

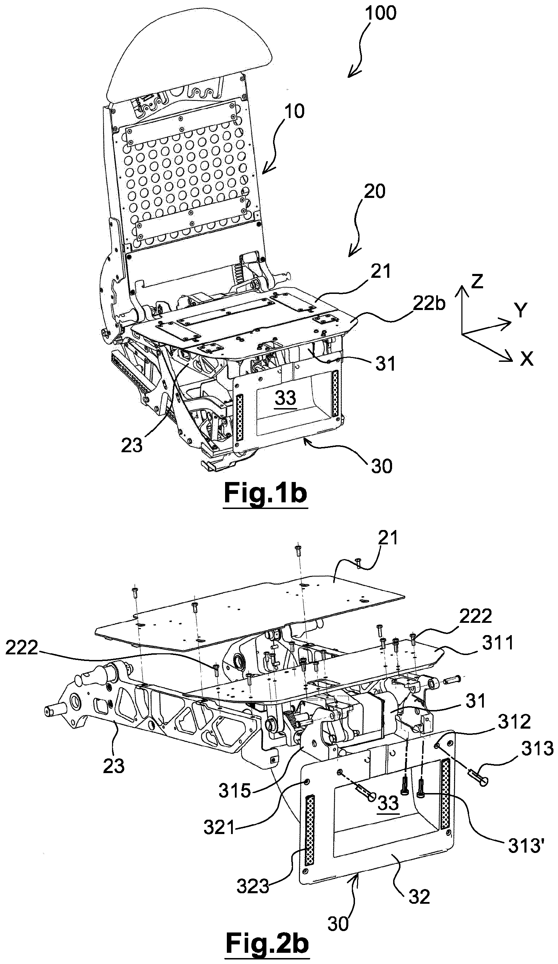

Les figures 1a et 1b illustre un exemple d'une structure 100 d'un siège selon l'invention suivant deux configurations : sans repose jambes, figure 1a, et avec repose jambes, figure 1b.

Pour les besoins de la description il sera fait appel à un système d'axes conventionnel avec un axe X horizontal orienté positivement vers l'avant du siège, un axe Z vertical orienté positivement vers le haut et un axe Y latéral, perpendiculaire à un plan défini par les directions horizontale et verticale, orienté positivement vers la gauche du siège.

Les termes avant, arrière, haut bas et les termes ou expressions équivalentes font référence aux positions ou directions qui leurs seraient données par un utilisateur du siège en position assis dans ledit siège. Ainsi l'avant du siège correspond à la direction vers laquelle regarde l'occupant assis dans le siège, sans tourner la tête, indépendamment de l'orientation que peut avoir le siège par rapport au sens de déplacement d'un véhicule dans lequel il est installé.

Le siège comporte une assise 20 et un dossier 10, dont seules des parties de structures sont représentées sur les figures 1a et 1b. Le siège est ici simplifié et dépouillé d'accessoires non nécessaires à la présentation de l'invention ni à sa compréhension, par exemple des accoudoirs ou un système de réglages du dossier, qui peuvent être présents ou non sur un siège de l'invention.

La structure 100 apporte au siège une résistance et une rigidité pour supporter le poids d'un occupant dans toutes conditions d'utilisation prévues dudit siège, qui permet de transmettre les efforts à une autre structure qui doit porter le siège, par exemple un plancher 90 de véhicule.

Dans la présente description et sauf dans le cas du repose jambes, il ne sera pas détaillé les mouvements relatifs de l'assise 20 et du dossier 10, ou d'autres parties mobiles du siège, ni les dispositifs mis en oeuvre pour assurer de tels mouvements possibles et leurs verrouillages.

La figure 1a représente une structure de siège 100 suivant l'invention dans le cas où le siège ne comporte pas de repose jambes.

La structure de l'assise 20 comporte principalement deux poutres 23 supportant une plaque arrière 21 d'assise et une plaque avant passive 22a d'assise.

La plaque avant passive 22a est située sur un bord avant de l'assise. En utilisation du siège, les plaques sont recouvertes d'un matelas d'assise, comme illustré sur le médaillon (a) de la figure 1a, et ne sont pas visibles par un utilisateur du siège.

La structure de l'assise comporte également des supports 241, 242 auxquels est fixée une boîte 30, destiné dans l'exemple d'application d'un siège d'aéronef à loger un gilet de sauvetage.

La boîte 30 comporte une platine frontale 32 et un caisson 33 formant une seule pièce.

La platine frontale 32 comporte un premier sous-ensembles d'une pluralité d'emplacements, ici des perçages 321, pour des fixations, ici des vis 322 de fixation, fixant la boîte en des points d'attache des supports 241, 242 de sorte que le caisson 33 se trouve maintenu fixe par rapport à la structure de l'assise sous une surface support du matelas d'assise déterminée par des faces supérieures de la plaque arrière 21 et la plaque avant passive 22a.

Sur la figure 1a, le gilet de sauvetage n'est pas représenté.

La platine frontale 32 comporte, sur une face avant, des bandes 323 d'un tissus auto-agrippant pour maintenir un panneau de fermeture, non représenté sur les figures 1a et 1b, du caisson 33, et pouvant être arraché par un utilisateur du siège lorsque cet utilisateur doit accéder au gilet de sauvetage placé dans ledit caisson.

Comme il est compris de la description supra, la boîte 30 est maintenue fixe sur la structure 100 du siège, et plus particulièrement sur la structure de l'assise 20 par l'intermédiaire des supports 241, 242.

Comme l'illustre également la figure 2a, la boîte 30, maintenue par les vis 322 traversant les perçages 321 et en prise sur des écrous prisonniers 243 solidaires des supports 241, 242, peut aisément être démontée ou remontée dans cette configuration du siège ne comportant pas de repose jambes.

Les écrous prisonniers 243 sont avantageusement des écrous auto-freinés pour éviter un desserrage non voulu sous l'effet de vibrations.

Le panneau de fermeture, non représenté, lorsqu'il est en place, protège le gilet de sauvetage placé dans le caisson 33 et assure la finition de la partie du siège sous le bord avant de l'assise en assurant la fonction d'un panneau d'habillage.

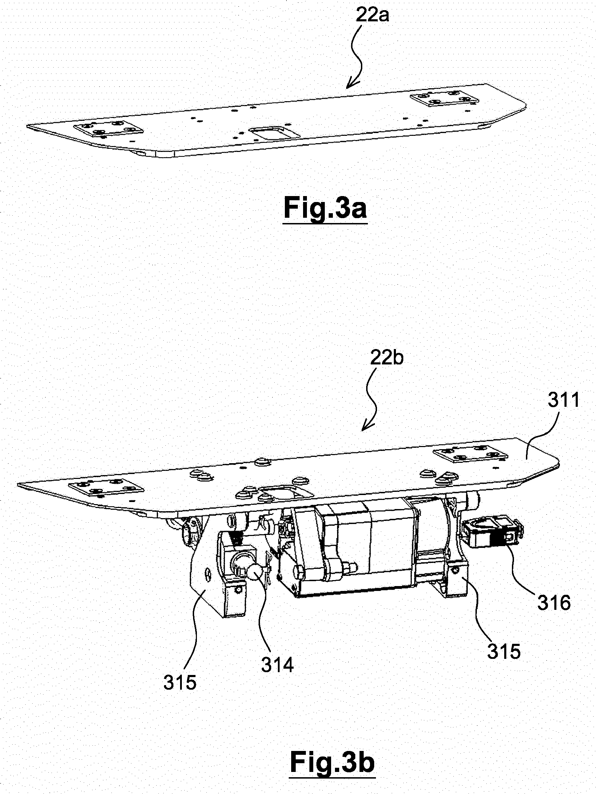

On remarque que la boîte 30 est fixée sur la structure de l'assise 20 indépendamment de la plaque avant passive 22a, représentée isolée sur la figure 3a, qui est également fixée de manière démontable sur la structure de l'assise. Il doit être compris ici que la boîte et la plaque avant passive peuvent être chacune démontées et remontées sur la structure de l'assise indépendamment l'une de l'autre.

Comme illustré sur la figure 2a, la plaque avant est fixée par des vis aux poutres 23 pour reprendre les efforts appliquées sur l'assise en utilisation.

On remarque également que la plaque avant passive 22a est fixée sur la structure de l'assise indépendamment de la plaque arrière 21. Il est ainsi possible de démonter et de remonter ladite plaque avant passive sans démonter la plaque arrière ce qui, outre la simplification des opérations de montage et de remontage, évite de déstabiliser la structure de l'assise lorsque la plaque avant passive est démontée, et ainsi évite la mise en oeuvre d'outillages spécifiques pour assurer le positionnement correct des différents éléments de la structure lors du remontage.

Comme illustré sur la figure 3a, la plaque avant passive 22a est, dans son utilisation pour un siège sans repose jambes, particulièrement simple et s'apparente à une simple plaque plane qui dans ce cas assure la continuité du plan de référence d'assise en avant de la plaque arrière 21.

Considérant maintenant les figures 1b et 2b, le siège comporte un repose jambes réglable.

La structure du siège 100 de la figure 1b comporte les mêmes composants principaux, en particulier le dossier 10 et l'assise 20, et dans le même agencement que pour le siège de la figure 1a sans repose jambes. En pratique la structure du siège avec repose jambes est identique à la structure du siège sans repose jambes, hors des options éventuelles du siège, sauf pour des parties spécifiques au repose jambes, parties qui sont détaillées ci-après.

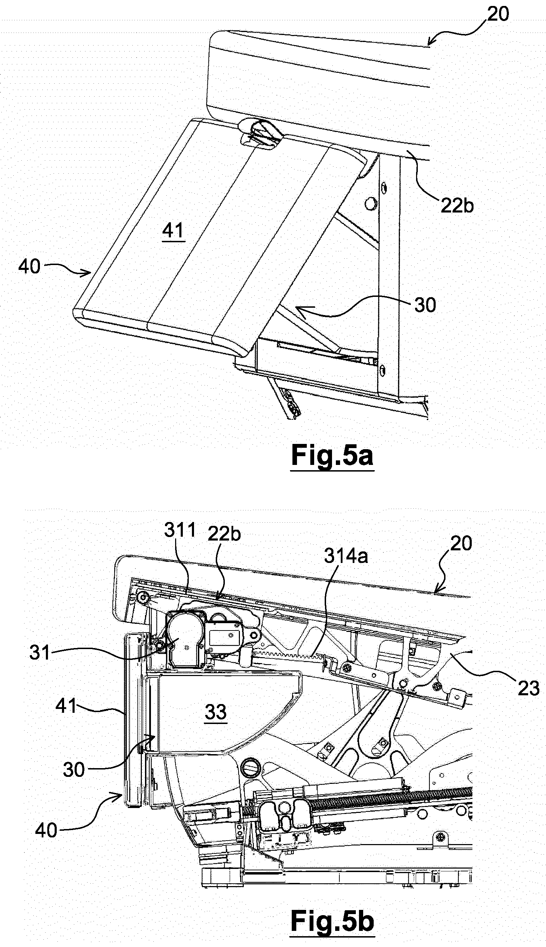

Le siège de la figure 1b comporte un repose jambes 40 dont une représentation en position partiellement relevée est présentée sur la vue perspective de la figure 5a.

De manière connue le repose jambes est réglable et peut prendre différentes positions dont au moins une position stockée lorsque le repose jambes n'est pas utilisé, et au moins une, en pratique plusieurs, position relevée.

Dans la position stockée, le repose jambes est dans une position qui permet à l'occupant du siège d'être dans la position assis sans gêne au niveau de ses jambes. Dans le cas du siège de la figure 1b, une surface de repos 41, visible sur la figure 5a, du repose jambes sur laquelle l'occupant du siège place ses jambes, lorsque ledit repose jambes est dans une position relevée, est sensiblement verticale sous une partie avant de la surface de référence d'assise, comme représenté sur la figure 5b.

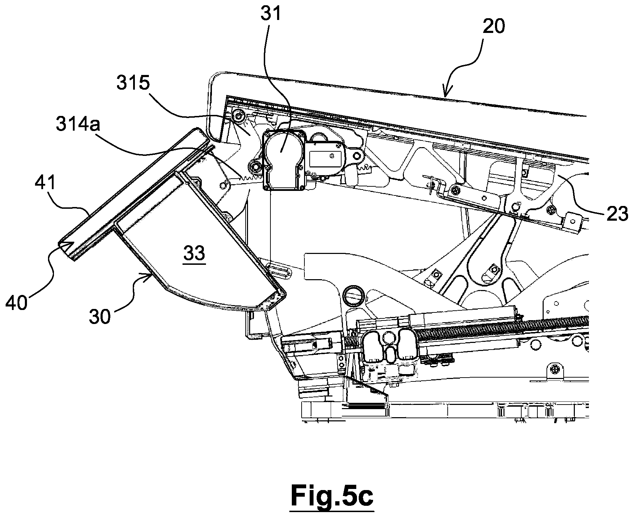

Dans la position relevée, la surface de repos 41 est projetée vers l'avant de l'assise, comme illustré sur la coupe de la figure 5c, en prenant une position plus ou moins rapprochée d'un plan horizontal pour former une surface sensiblement en continuité avec une surface du matelas d'assise en formant un angle plus ou moins prononcé, le cas échéant un angle plat.

En outre le repose jambes 40 est, en conditions normale d'utilisation, fixé sur la boîte 30 dont il assure la fonction de panneau de fermeture pour maintenir le gilet de sauvetage, ou un autre objet, protégé dans le caisson 33. Par exemple le repose jambes recouvre, au moins en partie, la platine frontale 32 de la boîte 30 sur laquelle platine frontale il est maintenu au moyen des bandes de tissus auto-agrippant 323.

Suivant une caractéristique du siège de la figure 1b, la position du repose jambes est modifiée en modifiant la position de la boîte 30 qui est dans cette configuration et solidaire et agencée mobile sur ladite structure de l'assise 20.

Pour modifier de manière contrôlée la position de la boîte 20 par rapport à la structure de l'assise, ladite boîte n'est plus fixée directement sur la structure de l'assise par les supports 241, 242, mais est solidaire d'une plaque avant active 22b.

Comme il est illustré sur la figure 2b de la structure partielle éclatée de l'assise, la plaque avant d'assise 22b comporte une plaque support 311, un actionneur 31 et des bras articulés 315, au moins un bras et de préférence deux bras comme dans l'exemple illustré.

Comme le montre la figure 3b de la plaque avant active 22b isolée et illustrée dans une orientation cohérente avec son orientation lorsqu'elle est fixée à la structure de l'assise, illustrée sur les figures 2a à 2b, l'actionneur 31 et les bras articulés 315 sont fixés à la plaque support 311 sur une face inférieure de ladite plaque support. Les bras articulés, dont des axes d'articulation sur la plaque support sont alignés, sont agencés pour permettre un débattement angulaire desdits bras articulés dans un plan vertical longitudinal XZ, de sorte que la boîte 30 fixée aux bras articulés a la possibilité de suivre un mouvement oscillant avant-arrière.

De préférence, les axes d'articulation sont situés à proximité de la plaque support 311 de sorte que les bras articulés ont un mouvement pendulaire qui conduit à un déplacement vers le haut de la boîte et à une rotation d'une face avant de ladite boîte pour rapprocher ladite face avant de l'horizontale, lorsque ladite boîte est déplacée vers l'avant.

L'actionneur 31 est dans l'exemple de réalisation un actionneur électrique, par exemple un motoréducteur, comportant un moteur qui déplace un piston 314, par exemple par l'intermédiaire d'une crémaillère 314a visible sur les figures 5b, 5c, pour entraîner une rotation de la boîte 30 vers l'avant pour déployer le repose jambes ou vers l'arrière pour ramener ce dernier vers la position stockée.

Dans cette configuration du siège, il est exclus que la boîte 30 soit fixée directement sur la structure fixe de l'assise et les vis 303 mises en oeuvre pour fixer ladite boîte dans le cas du siège sans repose jambes sont nécessairement absentes, même lorsque, comme dans le cas illustré sur les figures 1a et 1b, les supports 24a, 24b sont conservés dans le siège avec repose jambes.

La platine frontale 32 comporte un deuxième sous-ensemble d'une pluralité d'emplacements, ici des perçages 312, pour des fixations, ici des vis 313 de fixation, fixant la boîte 30 aux bras articulés 315 de sorte que le caisson 33 se trouve dans la position stockée du repose jambes sous la surface support du matelas d'assise.

Pour fixer la boîte 30 sur les bras articulés 315 les emplacements pour fixations du deuxième sous-ensemble sont situés sur la boîte 30 pour correspondre à des points d'attache sur lesdits bras articulés, par exemple des écrous prisonniers, ou des trous taraudés, desdits bras articulés.

En outre, les points d'attache des bras articulés 315 sont situés en des emplacements différents des points d'attaches sur les supports 241, 242 de la structure de l'assise, et donc les emplacements pour fixations du deuxième sous-ensemble sont situés sur la boîte 30 différemment des emplacements pour fixations du premier sous-ensemble.

Une autre caractéristique tient au fait que la plaque avant active 22b, mise en oeuvre pour le siège comportant le repose jambes, est interchangeable avec la plaque avant passive 22a, mise en oeuvre pour le siège sans repose jambes, présentant pour cela avantageusement, mais non nécessairement, les mêmes positions des perçages sur ladite plaque avant passive et sur la plaque support 311 pour utiliser les mêmes points de fixation sur la structure de l'assise.

Avantageusement, comme dans les exemples illustrés et particulièrement apparent sur les figures 2a et 2b, la plaque support 311 de la plaque avant active est identique à la plaque avant passive 22a, la plaque avant passive et la plaque avant active ne se distinguant que par les accessoires et équipements dont elles sont équipées.

Ainsi, avec une même structure de siège, il est obtenu avec une plaque avant différente deux modèles de siège, un premier modèle sans repose jambes suivant la configuration de la figure 1a avec la plaque avant passive 22a et dans lequel la boîte 30 est fixée immobile par des supports sur la structure de l'assise, et un second modèle avec repose jambes suivant la configuration de la figure 1b avec la plaque avant active 22b qui comporte un actionneur et des bras articulés auxquels est fixée la même boîte 30 pour servir de support mobile au repose jambes réglable.

De préférence, la boîte 30 a la même position, dans un système d'axe lié à la structure de l'assise, d'une part lorsqu'elle est fixée aux supports 241, 242 dans la configuration du siège sans repose jambes et d'autre part lorsqu'elle est fixée aux bras articulés 315 dans la configuration du siège avec repose jambes et que le repose jambes est en position stockée.

Les avantages de cet agencement ressortiront clairement du procédé de conversion d'un siège décrit par la suite.

L'exemple de réalisation décrit de manière détaillée peut faire l'objet de variantes sans se démarquer des principes de l'invention.

En particulier les formes des supports, les types et nombres de fixations utilisées et le type d'actionneur peuvent être différent de l'exemple illustré. D'une manière générale la structure du siège peut être différente de celle représentée dans l'exemple de réalisation pour autant qu'elle permette le montage d'une plaque avant d'assise suivant les principes de l'invention associée à une boîte sous une partie avant de l'assise.

La cinématique des bras articulés peut également être différente de celle de l'exemple illustré pour autant qu'elle permet de conduire à des déplacements similaires du repose jambes lors du déploiement et du stockage dudit repose jambes.

Dans une forme de réalisation, la structure de l'assise ne comporte pas de plaque arrière et la plaque avant, passive ou active, mise en oeuvre correspond à la surface de l'assise.

Le siège, suivant la présence ou non du repose jambes, peut également comporter des adaptations d'éléments secondaires, par exemple d'habillage ou de matelas, par exemple pour permettre l'accès à une commande 316 de l'actionneur 31, commande qui est avantageusement fixée à la plaque avant active 22b.

Il doit également être noté que la boîte 30 est présentée comme une boîte à gilet de sauvetage, en particulier pour une application à un siège d'aéronef, mais que la boîte peut être utilisée pour ranger tout produit devant rester accessible pour l'utilisateur du siège. Par exemple, le produit peut être un équipement de sécurité autre qu'un gilet de sauvetage, le produit peut être un effet personnel de l'utilisateur du siège qui utilise dans ce cas le caisson 33 comme un coffre de rangement.

Le panneau de fermeture, utilisé ou non comme repose jambes, peut également être maintenu par tout moyen de fixation temporaire permettant d'ouvrir et de refermer la boîte du caisson avec ledit panneau de fermeture.

Un bénéfice du siège de l'invention est de permettre une conversion simple et rapide du siège sans repose jambes en un siège avec repose jambes ou inversement.

Un procédé pour convertir un siège sans repose jambes en un siège avec repose jambes comporte les étapes suivantes.

Sans que ces opérations relèvent spécifiquement du procédé, le siège est préparé préalablement pour réaliser la conversion. Cette préparation consiste par exemple à placer le siège sur un support de travail, pour le confort et la sécurité des opérateurs réalisant la conversion, à retirer du siège les parties non structurales du siège, par exemple des matelas, des panneaux d'habillage, le panneau de fermeture du caisson 33, le gilet de sauvetage dans ledit caisson, et de manière générale tout élément du siège pouvant gêner les opérations de conversion ou être endommagées lors de ces opérations.

Dans une première étape de la conversion, la plaque avant passive 22a du siège sans repose jambes est démontée, dans l'exemple illustré sur la figure 1a simplement après avoir retiré les vis 222, quatre vis dans l'exemple illustré, fixant ladite plaque avant sur les poutres 23 de l'assise.

Dans une deuxième étape de la conversion, la plaque avant active 22b comportant l'actionneur 31 et des bras articulés 315 est placée à l'emplacement laissé libre par la plaque avant passive 22a démontée à l'étape précédente. Ladite plaque avant active est ensuite fixée par des vis sur les poutres 23 de l'assise que la plaque avant passive, avantageusement en utilisant les mêmes points de fixation.

Dans une troisième étape de la conversion, les bras articulés 315 sont fixés à la boîte 30, qui est toujours maintenue fixée à la structure de l'assise par les supports 241, 242. Dans l'exemple des figures 1b et 2b chaque bras articulé est fixé par au moins une vis 313 passant dans un perçage de la platine 32 de la boîte et situé en vis à vis d'un écrou prisonnier ou d'un trou taraudé dudit bras articulé comme visible sur les figures. Avantageusement, en particulier pour obtenir un meilleur encastrement de la liaison entre la boîte et un bras articulé, au moins une vis 313' traverse un perçage, non visible sur les figures, dans une paroi supérieure de ladite boîte et situé en vis à vis d'un écrou prisonnier ou d'un trou taraudé dudit bras articulé.

Dans une quatrième étape de la conversion, les fixations fixant la boîte 30 aux supports 241, 242 de la structure de l'assise, dans le cas illustré les quatre vis 322, sont retirées de sorte que les bras articulés sont en mesure de déplacer ladite boîte qui n'est plus liée à d'autre élément que lesdits bras articulés.

Dans une étape ultérieure à la conversion, les éléments du siège retirés par précaution dans l'étape préalable sont replacés sur la structure du siège converti en siège avec repose jambes, le panneau de fermeture du caisson étant remplacé par le repose jambes 40.

Pour réaliser la conversion inverse d'un siège avec repose jambes en un siège sans repose jambes, les actions réalisées lors de la conversion sont inversées et exécutées dans l'ordre inverse de celui exposé précédemment. :
- dans la position stockée du repose jambes, le boîtier 30 est fixé à la structure de l'assise au moyen des vis 322 traversant les perçages 321 ;
- les fixations 313, 313' maintenant le boîtier 30 aux bras articulés 315 sont retirées de sorte que lesdits bras articulés et ledit boîtier ne sont plus maintenus fixés directement entre eux ;
- la plaque avant active 22b est désolidarisée de la structure de l'assise en retirant les fixations correspondantes, dans l'exemple illustré les quatre vis 222, puis ladite plaque avant active est retirée ;
- la plaque avant passive 22a est enfin fixée à la structure de l'assise à l'emplacement libéré par la plaque avant active en replaçant des fixations aux emplacements prévus.

Le procédé, dont les étapes identifiées sont ici les étapes essentielles dans l'ordre où elle doivent être réalisée pour les conversions, mais qui peuvent comporter d'autre étapes non précisées ici, permet donc de convertir un siège de manière particulièrement efficace, le retrait et la pose de quelques vis (huit ou douze dans l'exemple), sans qu'il soit nécessaire de faire usage outillage spécifique et sans nécessiter de réglages particulier.

Ces possibilités sont obtenues par une architecture particulière du siège et de sa structure et par la mise en oeuvre d'un kit de conversion limité à une plaque avant, équipée ou non d'un actionneur et de bras articulés.

Les coûts de fabrication et d'entretien d'un tel siège convertible son avantageusement réduits par un effet d'augmentation des séries produites et de la diminution du nombre de pièces de rechanges nécessaires en exploitation.

Les coûts de conversion et les temps d'immobilisation des sièges sont également réduits en raison du nombre réduit d'opérations à réaliser sur chaque siège et ce résultat est atteint sans pénaliser la masse et le coût du siège dans sa forme la plus simple ne comportant pas le repose jambes.

## Revendications

1. Siège comportant une assise (20), ladite assise comportant une surface support de matelas d'assise fixée à une structure de ladite assise, et une boîte (30), ladite boîte comportant un caisson (33) placé sous la surface support de matelas d'assise **caractérisé en ce que** la boîte (30) peut être fixée immobile sur la structure de l'assise ou fixée mobile par rapport à la structure de l'assise par l'intermédiaire d'un ou de plusieurs bras articulés (315) autour d'un axe de rotation, orienté suivant une direction latérale Y, par rapport à la structure de l'assise, et **en ce que** la boîte (30) comporte un ensemble d'emplacements pour fixations, ledit ensemble comportant :
- un premier sous-ensemble d'une pluralité d'emplacements pour fixations dans lequel premier sous-ensemble chaque emplacement pour une fixation est situé, dans une position stockée de la boîte (30), en vis-à-vis d'un point d'attache fixe sur la structure de l'assise ; et
- un deuxième sous-ensemble d'une pluralité d'emplacements pour fixations, tous distincts des emplacements pour fixations du premier sous-ensemble, dans lequel deuxième sous-ensemble chaque emplacement pour une fixation est situé, dans la position stockée de la boîte (30), en vis-à-vis d'un point d'attache sur un bras articulé (315) par rapport à la structure de l'assise lorsque le siège est pourvu du ou des bras articulés.

2. Siège suivant la revendication 1 dans lequel, lorsque le siège est en condition d'utilisation, la boîte (30) est fixée à la structure de l'assise par une ou des fixations placées aux emplacements pour fixations du premier sous-ensemble, à l'exclusion des emplacements pour fixations du deuxième sous-ensemble.

3. Siège suivant la revendication 2 dans lequel, une plaque avant passive (22a), formant tout ou partie de la surface support de coussin d'assise, est fixée à la structure de l'assise du côté d'un bord avant de l'assise.

4. Siège suivant la revendication 1, comportant un ou plusieurs bras articulés (315), dans lequel, lorsque le siège est en condition d'utilisation, la boîte (30) est fixée audit ou auxdits bras articulés par des fixations placées aux emplacements pour fixations du deuxième sous-ensemble, à l'exclusion des emplacements pour fixations du premier sous-ensemble.

5. Siège suivant la revendication 4 dans lequel, une plaque avant active (22b), comportant une plaque support (311) formant tout ou partie de la surface support de coussin d'assise, est fixée à la structure de l'assise du côté d'un bord avant de l'assise, et à laquelle plaque support sont fixés le ou les bras articulés (315) et un actionneur (31), agencé pour modifier une position de la boîte (30) fixée à ou aux bras articulés.

6. Siège suivant la revendication 4 ou la revendication 5 dans lequel, le caisson (33) de la boîte (30) est fermé par un repose jambes (40) fixé sur une face avant de ladite boîte, la position dudit repose jambes par rapport à l'assise (20) résultant de la position de ladite boîte, modifiable par l'actionneur (31).

7. Siège suivant la revendication 3 dépourvu de repose jambes et comportant une plaque avant passive (22a).

8. Siège suivant la revendication 5 comportant un repose jambes et une plaque avant active (22b).

9. Siège dans lequel la structure de l'assise comporte des logements de fixations pour le montage alternativement d'une plaque avant passive (22a) conforme à la plaque avant passive du siège de la revendication 3 ou de la revendication 7, ou d'une plaque avant active (22b) conforme à la plaque avant active de la revendication 5 ou de la revendication 8.

10. Siège suivant la revendication 9 dans lequel les mêmes logements de fixations de la structure de l'assise sont mis en oeuvre pour fixer à ladite structure de l'assise, par des fixations démontables, alternativement la plaque avant passive (22a) et la plaque avant active (22b), lesdites plaques avant passive et plaque avant active étant mécaniquement interchangeables.

11. Siège suivant la revendication 9 ou la revendication 10 comportant au moins une plaque arrière (21) formant une partie de la surface support de matelas d'assise, ladite plaque étant fixée sur la structure de l'assise indépendamment de la plaque avant passive (22a) ou de la plaque avant active (22b) suivant le cas.

12. Procédé de conversion d'un siège conforme à l'une des revendications précédentes dans lequel un siège ne comportant pas de repose jambes est converti en un siège comportant un repose jambes, ou inversement un siège comportant un repose jambes est converti en un siège ne comportant pas de repose jambes, ledit procédé de conversion comportant une étape dans laquelle la boîte (30) est fixée simultanément à la structure de l'assise et à au moins un bras articulé (315) par rapport à la structure de l'assise.

13. Procédé de conversion suivant la revendication 10 d'un siège sans repose jambes en siège avec repose jambes comportant les étapes de :
- démonter une plaque avant passive (22a) fixée sur la structure de l'assise ; puis
- fixer une plaque avant active (22b), équipée d'un actionneur (31) du repose jambes et d'un ou plusieurs bras articulés (315), à la structure de l'assise à l'emplacement laissé libre par la plaque avant passive (22a) démontée à l'étape précédente ; puis
- fixer les bras articulés (315) à la boîte (30), maintenue fixée à la structure de l'assise ; puis
- retirer les fixations fixant la boîte (30) à la structure de l'assise.

14. Procédé de conversion suivant la revendication 10 d'un siège avec repose jambes en siège sans repose jambes comportant les étapes de :
- placer le repose jambes (40) dans une position stockée ; puis
- fixer la boîte (30) à la structure de l'assise ; puis
- désolidariser le ou les bras articulés (315) de la boîte (30) ; puis
- démonter une plaque avant active (22b), supportant un actionneur (31) du repose jambes et les bras articulés (315) ; puis
- fixer la plaque avant passive (22a) à la structure de l'assise à l'emplacement laissé libre par la plaque avant active (22b) démontée à l'étape précédente.
